# EUROPEAN PATENT APPLICATION

(11) **EP 4 357 193 A1**
(43) Date of publication of application: **24.04.2024**
(21) Application number: 22857774.8
(22) Date of filing: 16.08.2022
(51) Int. Cl.: B60L 53/80, B60L 50/61

(54) **QUICK-SWAPPING HYBRID VEHICLE, QUICK SWAPPING PLATFORM, AND QUICK SWAPPING METHOD**

(30) Priority: 20.08.2021 CN 202110963517
(71) Applicant: Zhejiang Geely Holding Group Co., Ltd., Hangzhou, Zhejiang 310051 (CN)
(72) Inventor: LI, Shufu, Hangzhou, Zhejiang 310051 (CN)
(74) Representative: Osterhoff, Utz
(86) International application number: PCT/CN2022/112686
(87) International publication number: WO 2023/020462

(57) **Abstract**

The present application relates to the technical field of vehicle endurance, and in particular to a quick-replacement hybrid vehicle, a platform and a method. The vehicle includes an electric drive module, a range extension module and a battery module. The range extension module is provided on the vehicle in a quick-replacement manner, and the range extension module includes an engine; the battery module is electrically connected to the range extension module and the electric drive module; and the battery module is provided on the vehicle in the quick-replacement manner. Based on the detachable installation with the vehicle, the range extension module can be adapted to different driving scenarios of the vehicle. Furthermore, the battery module is electrically connected to the range extension module and the electric drive module, making the range extension module to supply power to the battery module after installed and provide power for the vehicle without directly participating in the drive, which does not affect the original electric drive module of the vehicle, does not increase vehicle noise and other issues, ensures the endurance mileage without making too many changes to the vehicle, and reduces the development costs.

## Description

### TECHNICAL FIELD

The present application relates to the technical field of vehicle endurance, and in particular to a quick-replacement hybrid vehicle, a platform and a method.

### BACKGROUND

At present, the new energy vehicles are mainly divided into two major types, hybrid vehicles and pure electric vehicles, and the pure electric vehicles are considered to be the future of the vehicle industry. Under the present technical condition, limited by the battery energy density and the fast-charging speed, the endurance mileage and the charging time of electric vehicles are always pain points for users of electric vehicles, which has troubled consumers and affected their willingness to purchase electric vehicles, seriously restricting the development and the promotion of the electric vehicles. The hybrid power system includes the 48V weak hybrid, the high-voltage strong hybrid, the plug-in hybrid, and the range extension, the diverse forms of which also represent the redundant design of the hybrid system, and energy saving and emission reduction can be achieved by adding additional components. These components, including batteries, motors and electronic controls, are additional burdens on the user.

After market research, users generally have two typical ways of using cars. The first is daily commuting, which takes up most of the time, and the daily driving distance is short; the second is long-distance driving. The vehicles with short daily driving distance cannot support the long-distance driving, while vehicles with long endurance mileage have extra weight of battery packs and hybrid components, which are redundant and burdensome when commuting, thus resulting in poor experience and cumbersome when it needs to replace the battery pack.

### SUMMARY

The technical problem to be solved by the present application is that the contradiction between the endurance mileage and the load weight of the vehicle in both short-distance driving and long-distance driving cannot be taken into account and the cumbersome steps of the battery replacement in the related art.

In order to solve the above technical problems, the present application provides a quick-replacement hybrid vehicle, a platform and a method.

According to an aspect of the present application, a quick-replacement hybrid vehicle is provided, including an electric drive module, characterized by further including: a range extension module provided on the vehicle in a quick-replacement manner; the range extension module includes an engine; a battery module electrically connected to the range extension module and the electric drive module; and the battery module is provided on the vehicle in a quick manner.

In an embodiment, the range extension module includes a first quick-replacement connector and a first electrical connector, the range extension module is provided on the vehicle in the quick-replacement manner through the first quick-replacement connector, and the first electrical connector is electrically connected to a circuit of the vehicle in a quick manner.

According to another aspect of the present application, a quick-replacement hybrid vehicle is provided, including: a range extension module and an electric drive module; the range extension module includes an engine, and the electric drive module includes a P1 motor and a P2/3 motor; one end of the P1 motor is connected to the engine in a quick-replacement manner, the other end of the P1 motor is connected to a gearbox through a clutch, and the other end of the gearbox is connected to the P2/3 motor.

In an embodiment, the quick-replacement hybrid vehicle further includes: a power control module and a differential.

According to another aspect of the present application, a quick-replacement hybrid vehicle is provided, including: a range extension module, the range extension module is modularly provided, and an engine, a generator, an air intake system, an exhaust system, and a fuel tank are integrated in the range extension module.

In an embodiment, the range extension module is provided at a rear end of the vehicle.

In an embodiment, the quick-replacement hybrid vehicle further includes: an electric drive module, the electric drive module is a three-in-one electric drive system, and is provided at the rear end of the vehicle and close to the range extension module.

According to another aspect of the present application, a quick-replacement platform is provided, including: a quick-replacement device for a battery; and a quick-replacement device for a range extension module; the quick-replacement device for the battery and the quick-replacement device for the range extension module are electrically connected to a controller of the quick-replacement platform and controlled by the controller respectively.

According to another aspect of the present application, a quick-replacement method, applied to the quick-replacement platform and executed by the controller, including:
obtaining navigation data of a vehicle, the navigation data includes a target distance between a present position of the vehicle and a target position and a number of power replenishment stations within a range of the target distance;
obtaining a preset state determination condition of the vehicle;
determining a target driving state of the vehicle according to the preset state determination condition and the target distance;
determining a type of a target power replacement equipment according to the target driving state, the type of the target power replacement equipment includes a first capacity battery, a second capacity battery and the range extension module, and a capacity of the first capacity battery is smaller than a capacity of the second capacity battery; and
sending the determined type of the target power replacement equipment to operators, so that the target power replacement equipment is replaced by the operators.

In an embodiment, determining the target driving state of the vehicle according to the preset state determination condition and the target distance includes:
in response to that the target distance is less than a first distance threshold, determining the target driving state to be a short-distance driving state;
in response to that the target distance is between the first distance threshold and a second distance threshold, and the number of power replenishment stations within the range of the target distance meets a target number threshold, determining the target driving state to be a long-distance driving state; and
in response to that the target distance is between the second distance threshold and a third distance threshold, and the number of power replenishment stations within the range of the target distance is less than the target number threshold, determining the target driving state to be a long-distance and long-time driving state.

In an embodiment, determining the type of the target power replacement equipment according to the target driving state includes:
in response to that the target driving state is the short-distance driving state, determining the type of the target power replacement equipment to be the first capacity battery;
in response to that the target driving state is the long-distance driving state, determining the type of the target power replacement equipment to be the second capacity battery or the range extension module; and
in response to that the target driving state is the long-distance and long-time driving state, determining the type of the target power replacement equipment to be the range extension module.

In the present application, the vehicle includes the electric drive module, the range extension module and the battery module. The range extension module is provided on the vehicle in the quick-replacement manner, and the range extension module includes the engine; the battery module is electrically connected to the range extension module and the electric drive module; and the battery module is provided on the vehicle in the quick-replacement manner. Based on the detachable installation with the vehicle, the range extension module can be adapted to different driving scenarios of the vehicle. Furthermore, the battery module is electrically connected to the range extension module and the electric drive module, making the range extension module to supply power to the battery module after installed and provide power for the vehicle without directly participating in the drive, which does not affect the original electric drive module of the vehicle, does not increase vehicle noise and other issues, ensures the endurance mileage without making too many changes to the vehicle, and reduces the development costs.

### BRIEF DESCRIPTION OF THE DRAWINGS

In order to illustrate the technical solutions in the embodiments of the present application or in the related art more clearly, the following briefly introduces the accompanying drawings required for the description of the embodiments or the related art. Obviously, the drawings in the following description are only part of embodiments of the present application. For those skilled in the art, other drawings can also be obtained according to the structures shown in these drawings without any creative effort.
FIG. 1 is a schematic structural view of a quick-replacement hybrid vehicle according to an embodiment of the present application.
FIG. 2 is a schematic structural view of a quick-replacement hybrid vehicle according to an embodiment of the present application.
FIG. 3 is a schematic structural view of a quick-replacement hybrid vehicle according to an embodiment of the present application.
FIG. 4 is a flowchart of a quick-replacement method according to an embodiment of the present application.
FIG. 5 is a flowchart of a method for determining a target driving state according to an embodiment of the present application.
FIG. 6 is a flowchart of a method for determining a type of a target equipment according to an embodiment of the present application.

In drawings, 1-battery module, 2-range extension module, 21-engine, 22-generator, 23-air intake system, 24-exhaust system, 3-electric drive module, 4-P1 motor, 5-P2/3 motor, 6-power control module, 7-differential.

### DETAILED DESCRIPTION OF THE EMBODIMENTS

In order to enable those skilled in the art to better understand, the technical solutions of the embodiments of the present application will be described in more detail below with reference to the accompanying drawings. It is obvious that the embodiments to be described are only some rather than all of the embodiments of the present application. All other embodiments obtained by those skilled in the art based on the embodiments of the present application without creative efforts shall fall within the scope of the present application.

"an embodiment" or "embodiments" herein means a particular feature, structure or characteristic that may be included in at least one realization of the present application. In the description of the application, it can be understood that the terms "up", "top", "bottom", etc., indicate the orientation or the position relationship based on the orientation or position relationship shown in the accompanying drawings only for the purpose of facilitating the description of the application and simplifying the description, and do not indicate or imply that the device or element referred to must have a particular orientation, or be constructed and operated in the particular orientation. Therefore, it cannot be construed as a limitation of the present application. In addition, the descriptions of "first", "second", etc. are only for the purpose of description, and should not be construed as indicating or implying relative importance or implicitly indicates the number of technical features indicated. Thus, a feature delimited with "first", "second" may expressly or implicitly include at least one of that feature. Furthermore, the terms "first", "second", etc., are used to distinguish similar objects and are not necessarily used to describe a particular order or precedence. It can be understood that the terms are interchangeable where appropriate so that embodiments of the application described herein can be implemented in an order other than those illustrated or described herein.

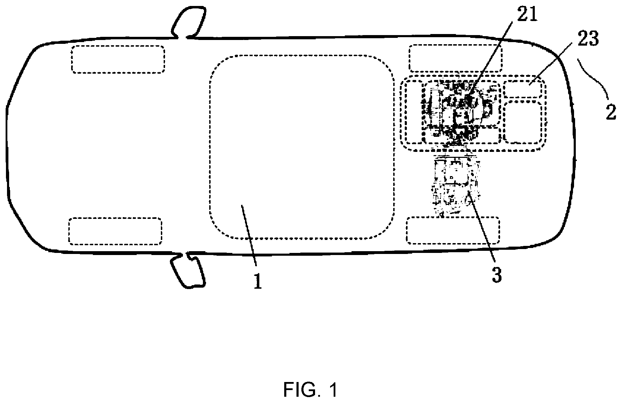

As shown in FIG. 1, a quick-replacement hybrid vehicle is provided, including an electric drive module 3, a range extension module 2 and a battery module 1. The range extension module 2 is provided on the vehicle in a quick-replacement manner, and the range extension module 2 includes an engine 21;
the battery module 1 is electrically connected to the range extension module 2 and the electric drive module 3; the range extension module 2 is provided on the vehicle in a quick-replacement manner. Based on the detachable installation with the vehicle, the range extension module 2 can be adapted to different driving scenarios of the vehicle. Furthermore, the battery module 1 is electrically connected to the range extension module 2 and the electric drive module 3, making the range extension module 2 to supply power to the battery module 1 after installed and provide power for the vehicle without directly participating in the drive, which does not affect the original electric drive module 3 of the vehicle, does not increase vehicle noise and other issues, ensures an endurance mileage without making too many changes to the vehicle, and reduces the development costs. Further, the range extension module 2 includes a first quick-replacement connector and a first electrical connector, the range extension module 2 is installed with the vehicle through the first quick-replacement connector, and the first electrical connector is electrically connected to a circuit of the vehicle in a quick manner.

In an embodiment, the first quick-replacement connector is configured as a first matching interface, and the range extension module 2 is detachably installed with the vehicle through the first matching interface. For example, the first matching interface may be a quick-replacement bolt, a quick-replacement pin, etc. The first electrical connector is configured as a second mating interface, and the battery module 1 is electrically connected to the circuit of the vehicle through the second mating interface. In an embodiment, the second matching interface may be a universal serial bus (USB) interface or a plug structure. In an embodiment, the vehicle is provided with a first vehicle interface matched with the first matching interface and a second vehicle interface matched with the second matching interface.

In an embodiment, the battery module 1 can be the original battery module 1 of the vehicle, which can be disassembled and installed with the vehicle through the second matching interface, so that the original battery module 1 of the vehicle can be replaced by disassembly and assembly. The range extension module 2 can be a power supply auxiliary module, which can be installed in the vehicle when needed, and is electrically connected to the battery module 1, so that the range extension module 2 can supply power to the battery module 1 and increase the endurance mileage. The range extension module 2 can also be removed when not needed to reduce a load of the vehicle. Therefore, by replacing the battery module 1 and disassembling and assembling the range extension module 2, the contradiction between the endurance mileage and the load weight in the short-distance driving and long-distance driving of the vehicle is taken into account.

For example, when daily commuting and convenient to charge, due to the short driving range, the user only needs to install the original battery module 1 of the vehicle, which can be charged at the destination every day, thereby ensuring normal use. For situations where it is occasionally difficult to charge or cannot be fully charged, the user can go to a nearby battery replacement station to replace the battery module 1. When long-distance commuting with a long driving mileage but convenient to charge and replace the battery, the user can replace a large-capacity battery at the battery replacement station to achieve a longer driving mileage when the battery of the range extension module 2 is low, and replace or charge the battery at the destination to meet usage needs. Furthermore, when driving with long distance and long periods of time and inconvenient to charge and replace batteries, the user can install the range extension module 2 at the battery replacement station, and use the range extension module 2 to supply power to the battery module 1. Since the first matching interface on the range extension module 2 is matched with the first vehicle interface on the vehicle, the quick installation of the range extension module 2 and the vehicle can be achieved. At the same time, since the range extension module 2 supplies power to the battery module 1 and does not directly participate in driving, it will not cause obvious noise, vibration and harshness (NVH) problems. The range extension module 2 can significantly increase the driving mileage, and every refuel can ensure that the driving mileage is not lower than that of the normal vehicle. In this state, the user can choose to refuel, charge or replace batteries at the appropriate place, which is more flexible and obviously solves the problem of range anxiety.

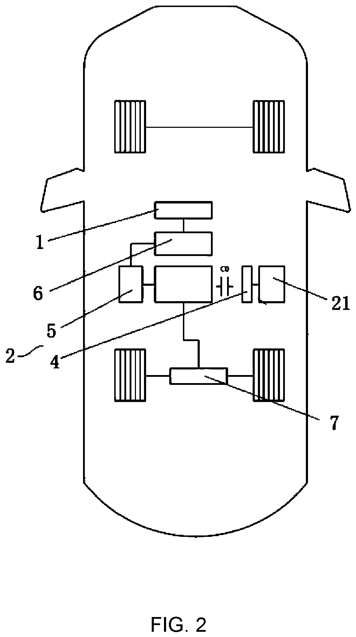

Furthermore, a quick-replacement hybrid vehicle is also provided, including the range extension module 2 and the electric drive module. As shown in FIG. 2, the range extension module 2 includes the engine 21, a P1 motor 4, and a P2/3 motor 5. One end of the P1 motor 4 is connected to the engine 21 in a quick-replacement manner, the other end of the P1 motor 4 is connected to a gearbox through a clutch, and the other end of the gearbox is connected to the P2/3 motor 5.

It can be understood that the P1 motor 4 is installed at an output end of the engine 21 to cooperate with a CO clutch and is mainly configured for automatic start/stop and idle charging, which can not only relieve the load pressure of the engine 21, but also enhance the power output. In an embodiment, the P2 and P3 motors are located on the other side of the gearbox and are mainly configured for pure electric drive and energy recovery in pure electric drive (EV) mode. In an embodiment, one of the P2 motor and the P3 motor can be integrated at the output end of the gearbox, and the other one of the P2 motor and the P3 motor is connected to an even-numbered gear of the gearbox.

Further, the vehicle also includes a power control module 6 and a differential 7.

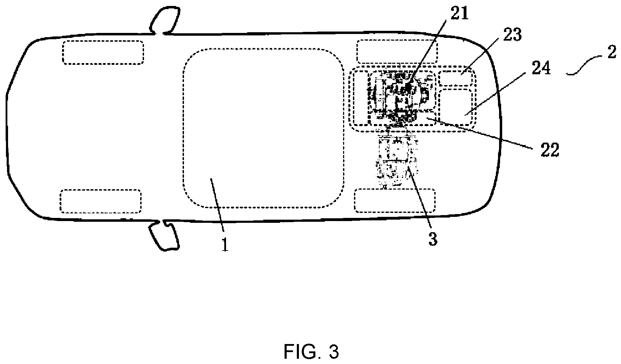

As shown in FIG. 3, an quick-replacement hybrid vehicle is also provided, including the range extension module 2 modularly provided, and the engine 21, the generator 22, the air intake system 23, the exhaust system 24, and the fuel tank are integrated in the range extension module 2. The air intake system 23 and the exhaust system 24 are respectively connected to the engine 21, and the engine 21 is respectively connected to the generator 22 and the fuel tank. By integrating the engine 21, the generator 22, the air intake system 23, the exhaust system 24 and a cooling system, the range extension module 2 is formed, which extends the endurance mileage, highly integrates vehicle components, and saves space.

In an embodiment, as shown in FIG. 3, the range extension module 2 can be provided at the rear end of the vehicle. In an embodiment, the electric drive module 3 of the vehicle can be provided offset to reserve the installation space for the range extension module 2 of the vehicle.

It can be understood that the range extension module 2 can also be provided at the front end of the vehicle.

Furthermore, the vehicle further includes the electric drive module 3, which is a three-in-one electric drive system and is provided at the rear end of the vehicle and close to the range extension module 2. In an embodiment, the three-in-one electric drive system can be an electric drive system integrating the motor, a gearbox and an inverter. In an embodiment, the gearbox can be a single-speed or two-speed gearbox. It can be understood that the three-in-one electric drive system can further reduce the weight of the vehicle and increase the space inside the vehicle. Furthermore, the integrated integration of the three-in-one electric drive system simplifies an external wiring between components and saves costs.

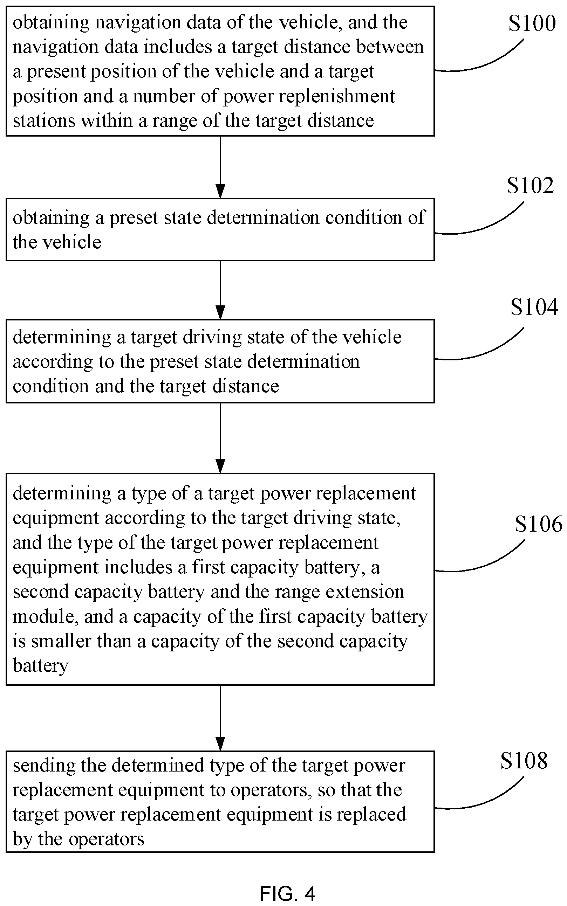

Referring to FIG. 4, the present application also provides a quick-replacement platform including a a quick-replacement device for battery and a quick-replacement device for range extension module are electrically connected to the controller of the quick-replacement platform and controlled by the controller respectively, thus the quick-replacement between the battery and the vehicle and the quick replacement between the range extension module 2 and the vehicle can be achieved, thereby improving the replacement efficiency.

As shown in FIG. 4, the present application also provides a quick-replacement method applied to the quick-replacement platform. The method is executed by the controller and includes:
S100, obtaining navigation data of the vehicle, and the navigation data includes a target distance between a present position of the vehicle and a target position and a number of power replenishment stations within a range of the target distance.

In an embodiment, the vehicle is equipped with a global position system (GPS) navigation system, which can realize functions such as positioning, destination selection, route calculation and route guidance. In this embodiment, the path can be planned through the GPS navigation system on the vehicle, the target distance between the present position and the target position can be determined based on the planned path, the number of power replenishment stations in the planned path can be determined, and the determined target distance and number of power replenishment stations are transmitted to the controller as the navigation data.

S102, obtaining a preset state determination condition of the vehicle.

The preset state determination condition of the vehicle may be preset and stored in the controller, and may be set based on a remaining capacity of the battery.

S104, determining a target driving state of the vehicle according to the preset state determination condition and the target distance.

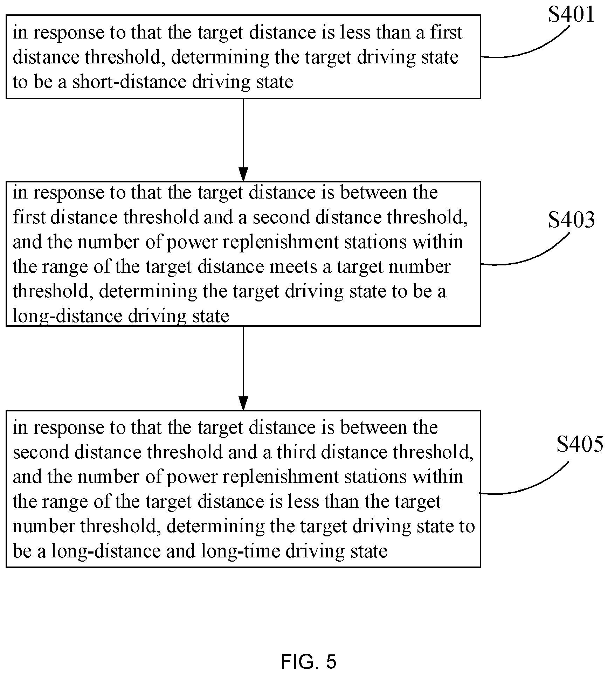

In an embodiment, determining the target driving state of the vehicle according to the preset state determination condition and the target distance can be achieved based on the steps shown in FIG. 5:
S401, in response to that the target distance is less than a first distance threshold, determining the target driving state to be a short-distance driving state;
S403, in response to that the target distance is between the first distance threshold and a second distance threshold, and the number of power replenishment stations within the range of the target distance meets a target number threshold, determining the target driving state to be a long-distance driving state; and
S405, in response to that the target distance is between the second distance threshold and a third distance threshold, and the number of power replenishment stations within the range of the target distance is less than the target number threshold, determining the target driving state to be a long-distance and long-time driving state.

It can be understood that the first distance threshold is less than the second distance threshold, and the second distance threshold is less than the third distance threshold. The first distance threshold, the second distance threshold and the third distance threshold can all be set according to actual needs, which are not limited here.

Furthermore, the target number threshold corresponding to the power replenishment station can also be set according to the actual situation. It can be understood that in S403, if the target distance is between the first distance threshold and the second distance threshold, and the number of power replenishment stations within the target distance range meets the target number threshold, it means that the target distance of the vehicle is long, but the power replenishment stations are sufficient on the way to replenish the vehicle, so there is no need to worry about the replenishment, and the target driving can be determined to be the long-distance driving state. In S405, if the target distance is between the second distance threshold and the third distance threshold, and the number of power replenishment stations within the target distance range is less than the target number threshold, it means that the target distance of the vehicle is long, and the power replenishment station on the way may not be able to satisfy the replenishment, and the target driving can be determined to be the long-distance and long-time driving state. At this time, the backup power replenishment equipment is needed to avoid the vehicle losing power seriously when it cannot travel to the power replenishment station.

S106. determining a type of a target power replacement equipment according to the target driving state, and the type of the target power replacement equipment includes a first capacity battery, a second capacity battery and the range extension module, and a capacity of the first capacity battery is smaller than a capacity of the second capacity battery.

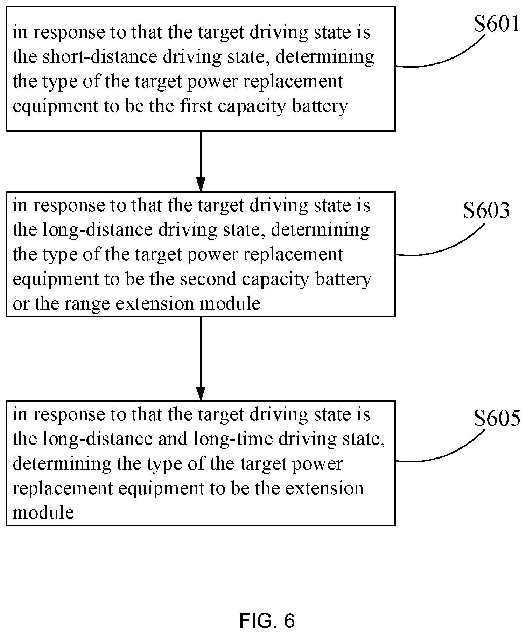

In an embodiment, S106 can be achieved based on the steps shown in FIG. 6:
S601, in response to that the target driving state is the short-distance driving state, determining the type of the target power replacement equipment to be the first capacity battery;
S603, in response to that the target driving state is the long-distance driving state, determining the type of the target power replacement equipment to be the second capacity battery or the range extension module; and
S605, in response to that the target driving state is the long-distance and long-time driving state, determining the type of the target power replacement equipment to be the extension module.

It can be understood that when the target driving state is the short-distance driving state, and the small-capacity battery can support driving to the target position. Therefore, the first capacity battery can be configured as the target power replacement equipment at this time. When the target driving state is the long-distance driving state, and the large-capacity battery is needed to support driving to the target position. At this time, the second capacity battery can be configured as the target battery replacement equipment. Furthermore, if the second capacity battery is inconvenient to replace, the range extension module can also be replaced to supply power. When the target driving state is the long-distance and long-time driving, many backup batteries need to be prepared, which will increase the vehicle load and occupy space. Therefore, the range extension module can be configured as the target replacement equipment at this time, which can realize the power replenishment without adding additional vehicle load.

S108, sending the determined type of the target power replacement equipment to operators, so that the target power replacement equipment is replaced by the operators.

The above descriptions are only embodiments of the present application, and are not intended to limit the scope of the present application. Under the inventive concept of the present application, any modification, equivalent replacement, improvement are included in the scope of the present application.

## Claims

1. A quick-replacement hybrid vehicle, comprising an electric drive module (3), **characterized by** further comprising:
a range extension module (2) provided on the vehicle in a quick-replacement manner; wherein the range extension module (2) comprises an engine (21); and
a battery module (1) electrically connected to the range extension module (2) and the electric drive module (3); wherein the battery module (1) is provided on the vehicle in the quick-replacement manner.

2. The quick-replacement hybrid vehicle according to claim 1, wherein the range extension module (2) comprises a first quick-replacement connector and a first electrical connector, the range extension module (2) is provided on the vehicle in the quick-replacement manner through the first quick-replacement connector, and the first electrical connector is electrically connected to a circuit of the vehicle in a quick manner.

3. A quick-replacement hybrid vehicle, **characterized by** comprising:
a range extension module (2); and
an electric drive module (3);
wherein the range extension module (2) comprises an engine (21), and the electric drive module (3) comprises a P1 motor (4) and a P2/3 motor (5); one end of the P1 motor (4) is connected to the engine (21) in a quick-replacement manner, the other end of the P1 motor (4) is connected to a gearbox through a clutch, and the other end of the gearbox is connected to the P2/3 motor (5).

4. The quick-replacement hybrid vehicle according to claim 3, further comprising: a power control module (6) and a differential (7).

5. A quick-replacement hybrid vehicle, **characterized by** comprising:
a range extension module (2), wherein the range extension module (2) is modularly provided, and an engine (21), a generator (22), an air intake system (23), an exhaust system (24), and a fuel tank are integrated in the range extension module (2).

6. The quick-replacement hybrid vehicle according to claim 5, wherein the range extension module (2) (1) is provided at a rear end of the vehicle.

7. The quick-replacement hybrid vehicle according to claim 6, further comprising an electric drive module (3), wherein the electric drive module (3) is a three-in-one electric drive system, and is provided at the rear end of the vehicle and close to the range extension module (2).

8. A quick-replacement platform, **characterized by** comprising:
a quick-replacement device for a battery; and
a quick-replacement device for a range extension module (2);
wherein the quick-replacement device for the battery and the quick-replacement device for the range extension module (2) are electrically connected to a controller of the quick-replacement platform and controlled by the controller respectively.

9. A quick-replacement method, applied to the quick-replacement platform according to claim 8 and executed by the controller, **characterized by** comprising:
obtaining navigation data of a vehicle, wherein the navigation data comprises a target distance between a present position of the vehicle and a target position and a number of power replenishment stations within a range of the target distance;
obtaining a preset state determination condition of the vehicle;
determining a target driving state of the vehicle according to the preset state determination condition and the target distance;
determining a type of a target power replacement equipment according to the target driving state, wherein the type of the target power replacement equipment comprises a first capacity battery, a second capacity battery and the range extension module, and a capacity of the first capacity battery is smaller than a capacity of the second capacity battery; and
sending the determined type of the target power replacement equipment to operators, so that the target power replacement equipment is replaced by the operators.

10. The quick-replacement method according to claim 9, wherein determining the target driving state of the vehicle according to the preset state determination condition and the target distance comprises:
in response to that the target distance is less than a first distance threshold, determining the target driving state to be a short-distance driving state;
in response to that the target distance is between the first distance threshold and a second distance threshold, and the number of power replenishment stations within the range of the target distance meets a target number threshold, determining the target driving state to be a long-distance driving state; and
in response to that the target distance is between the second distance threshold and a third distance threshold, and the number of power replenishment stations within the range of the target distance is less than the target number threshold, determining the target driving state to be a long-distance and long-time driving state.

11. The quick-replacement method according to claim 10, wherein determining the type of the target power replacement equipment according to the target driving state comprises:
in response to that the target driving state is the short-distance driving state, determining the type of the target power replacement equipment to be the first capacity battery;
in response to that the target driving state is the long-distance driving state, determining the type of the target power replacement equipment to be the second capacity battery or the range extension module; and
in response to that the target driving state is the long-distance and long-time driving state, determining the type of the target power replacement equipment to be the range extension module.
